# EUROPÄISCHE PATENTSCHRIFT

(11) **EP 2 250 009 B1**
(45) Veröffentlichungstag und Bekanntmachung des Hinweises auf die Patenterteilung: **05.08.2015**
(21) Anmeldenummer: 08848941.4
(22) Anmeldetag: 07.11.2008
(51) Int. Cl.: B29C 45/00, B29C 45/14, B65D 1/26, B65D 1/28

(54) **ROHRFÖRMIGER BEHÄLTER**
TUBULAR CONTAINER
RÉCEPTACLE TUBULAIRE

(30) Priorität: 14.11.2007 DE 102007054661
(43) Veröffentlichungstag der Anmeldung: 17.11.2010
(73) Patentinhaber: Jaeniche Gmbh & Co Kg, 77694 Kehl-Leutesheim (DE)
(72) Erfinder: BARTOS, Daniel, 77866 Rheinau (DE); HEIDT, Peter, 77694 Kehl (DE); ENGEL, Marco, 77694 Kehl (DE)
(74) Vertreter: Fritsch, Klaus
(86) Internationale Anmeldenummer: PCT/EP2008/009396
(87) Internationale Veröffentlichungsnummer: WO 2009/062632

(56) Entgegenhaltungen:
- EP-A- 0 481 090
- EP-A- 1 637 457
- EP-A- 1 757 525
- WO-A-2008/135657
- DE-A1- 2 123 472
- JP-A- 11 010 672
- JP-A- 11 028 741
- JP-A- 2002 225 828
- JP-A- 2003 011 181
- JP-A- 2004 276 964
- JP-A- 2005 007 653
- JP-A- 2005 028 833
- JP-A- 2006 001 569
- JP-A- 2006 315 726
- JP-A- 2007 176 566
- US-A1- 2004 239 005
- US-A1- 2008 075 902

## Beschreibung

Die Erfindung betrifft einen rohrförmigen, aus gieß- oder spritzbarem aushärtendem Kunststoff bestehenden Behälter, mit auf der Außenseite im In-Mould-Verfahren aufgebrachtem Etikett und mit einem Bodenabschnitt an einem Ende.

Derartige Behälter werden häufig als Tablettenbehälter benutzt, die meist eine Zylinderform besitzen, auf deren Außenfläche eine Kennzeichnung aufgebracht ist. Bei manchen Behältern wird die Kennzeichnung aufgedruckt oder als Etikett oder Label aufgeklebt.

Aus der DE 10 2005 045 621 A1 ist ein Verpackungsbehälter insbesondere zur Aufnahme von Lebensmitteln bekannt geworden, auf dessen Außen- oder Mantelfläche wenigstens eine Folie aufgebracht ist, die die gesamte Boden- und Mantelfläche überdeckt, wobei die Folie mit dem Kunststoffmaterial des Behälters zumindest teilweise verschmolzen ist. Die Folie dient dabei zu Erzeugung einer Gasdichtigkeit, weil die Folie im festen Zustand eine gegenüber dem Kunststoff des Behälters höhere Gasdichtigkeit aufweist. Über die Form des Behälters ist nichts ausgesagt.

Aus der EP 1 698 447 A1 ist die Verwendung einer Folienanordnung für das In-Mould-Labeling bekannt geworden. Über die Ausgestaltung des Behälters ist nichts ausgesagt.

Aus der DE 10 2005 037 274 A1 ist ein zylindrisches Formteil mit In-Mould-Labeling bekannt geworden, dessen Boden an dem bodenseitigen Ende des Behälters anschließt und nach innen gewölbt ist. Das Formteil dient hier als Deckel, insbesondere als Tubendeckel.

Aus der EP 481090 A1 ist ein In-Mould-Verfahren zur Anbringung eines Labels bekannt. Das Label besitzt eine spezielle Form mit Seitenwänden und einem Bodenbereich. Der Bodenbereich ist im wesentlichen eben.

Die JP 2003137258 A beschreibt einen Behälter mit In-Mould-Labeling, dessen Boden eben und in einem Abstand von dem bodenseitigen Ende angeordnet ist.

Aus der JP - A -11 - 10672 sind mehrere Behälterformen bekannt geworden, bei denen ein zwischen dem Boden und der Behälterwand vorgesehener übergang dargestellt ist.

Es hat sich herausgestellt, dass sich bei den bekannten Anordnungen und Verfahren, die sich im allgemeinen nicht mit dem In-Mould-Labeling von Tablettenröhrchen befassen, das Label oder Etikett beim Spritz- oder Gießvorgang des als Tablettenröhrchen ausgebildeten Behälters oft verschiebt, weil offensichtlich das Spritz- oder Gießmaterial ungünstig auf das Label auftrifft, und weil aufgrund des geringen Durchmessers eine automatisiertes Einlegen und Festhalten des Labels schwierig ist.

Aufgabe der Erfindung ist es, einen Behälter der eingangs genannten Art zu schaffen, bei dem das Verschieben des Labels sicher verhindert ist.

Diese Aufgabe wird erfindungsgemäß gelöst durch die Merkmale des Anspruches 1.

Damit fließt der flüssige Kunststoff über den Konus in den radialen Flansch und trifft dort auf das Label, welches die Einmündung des radialen Flansches in axialer Richtung überdeckt. Dadurch wird das Label nicht verschoben, vielmehr durch den flüssigen Kunststoff festgehalten.

Bei einer ersten Ausgestaltung kann sich der Konus zur bodenseitigen Stirnkante des Behälters öffnen oder, bei einer zweiten Ausgestaltung, zum Innenraum des Behälters.

Es hat sich herausgestellt, dass, wenn der Konuswinkel, das ist der Winkel zwischen der Mittelachse des Konus und seiner Innenmantellinie, zwischen 15 bis 45 Grad beträgt; besonders vorteilhaft ist es, wenn der Konuswinkel ca. 30 Grad beträgt.

Der Übergang zwischen dem Bodenabschnitt und dem Konus ist eckig ausgeführt;
lediglich der Übergang zwischen der Innenfläche des radialen Flansches und der Innenfläche des Behälters kann bogenförmig ausgebildet sein.

Weitere vorteilhafte Ausgestaltungen und Verbesserungen der Erfindung sind den weiteren Unteransprüchen zu entnehmen.

Anhand der Zeichnung, in der vier Ausführungsformen der Erfindung dargestellt sind, sollen die Erfindung, weitere vorteilhafte Verbesserungen und weitere Vorteile der Erfindung näher erläutert und beschrieben werden.

Es zeigen:

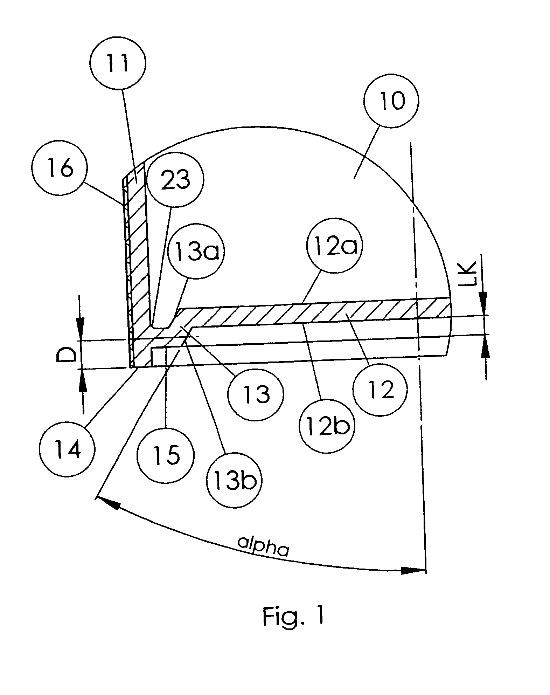

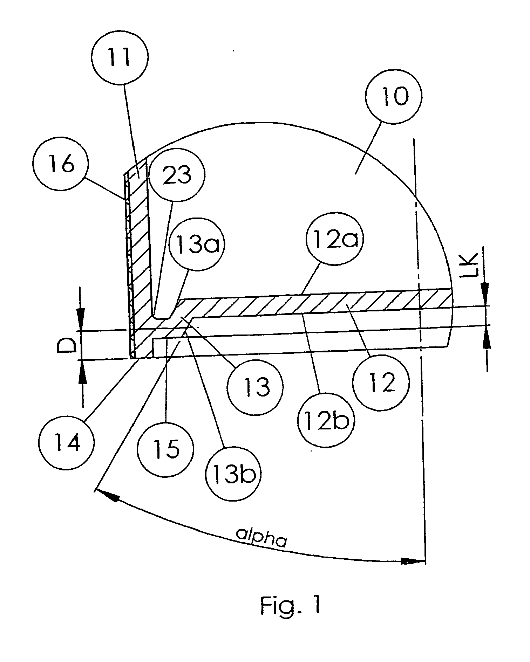

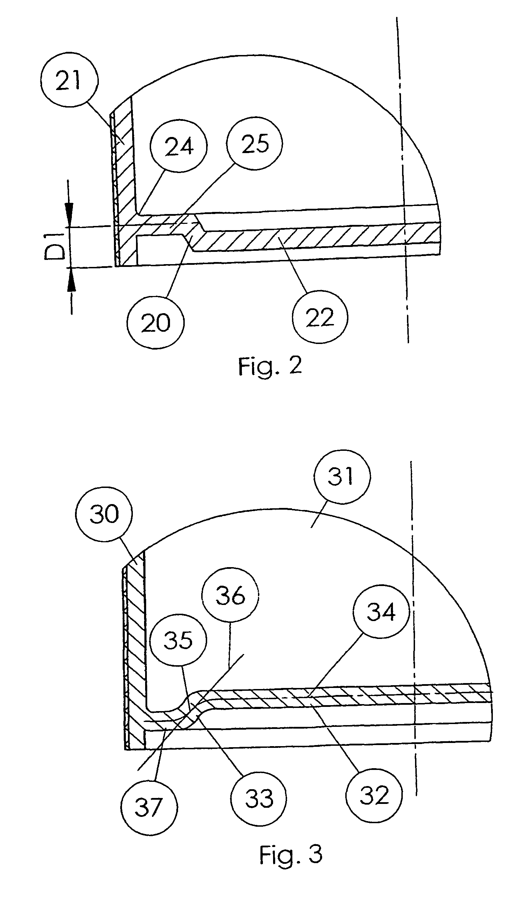

Fig. 1 bis 5 Unterschiedliche Ausführungsformen des Übergangs Bodenabschnitt zur Innenfläche des Behälters. Die Ausführungsform gemäß der Figur 3 entspricht nicht der Erfindung.

Ein Behälter 10 ist als Tablettenbehälter ausgebildet und besitzt einen zylindrischen Mantel 11 und einen Bodenabschnitt 12. An den Bodenabschnitt 12 schließt ein Konus 13 an, der sich zur bodenseitigen Stirnkante 14 des Behälters 10 öffnet, so dass das Ende des Konus 13 mit dem kleineren Durchmesser am Bodenabschnitt 12 anschließt. Zwischen dem Ende des Konus mit größerem Durchmesser und der Innenfläche des Mantels 11 des Behälters 10 ist ein radialer Flansch 15 angeordnet, der in einem Abstand D in die Innenfläche des Mantels 11 einmündet. Der Konuswinkel alpha beträgt bei der hier dargestellten Ausführungsform etwa 30 Grad, kann aber auch zwischen 15 bis 45 Grad betragen. Der Abstand D beträgt etwa 1,5 mal der Dicke des Bodenabschnittes 12

Auf der Außenfläche des Mantels 11 befindet sich ein Label 16, welches im In-Mould-Verfahren beim Herstellen des Behälters 10 auf der Außenfläche des Mantels 11 aufgebracht worden ist.

Zur Herstellung des Behälters wird ein Werkzeug benutzt, das einen dem Behälter 10 entsprechenden Hohlraum für den Kunststoff aufweist, wobei die Teilung des Werkzeuges in der Ebene der Außenfläche des Bodenabschnittes 12 liegt. Nach Einlegen des Labels 16 an die Außenfläche des Hohlraumes im Werkzeug wird der flüssige Kunststoff über eine mittig in die Außenfläche des Bodenabschnittes 12 einmündende Kunststoffzufuhr im Werkzeug in den Hohlraum des Werkzeuges eingebracht und fließt im Hohlraum über die Konusform und den radialen Flansch 15 in den Mantel 11 des Behälters 10, wo ein Teil zur Stirnkante fließt und dabei das Label 16 dort festhält, wogegen der andere Teil in den Mantel 11 zum offenen Ende des Behälters 10 gepresst wird. Dabei wird das Label 16 nicht verschoben, sondern bleibt an Ort und Stelle in dem Werkzeug, welches zur Herstellung des Behälters dient.

Die Übergänge der axialen Begrenzungsflächen 12a,12b, d.h. der Außen- und Innenflächen, des Bodenabschnitts 12 in die des Konus 13 und der Übergang der Außenfläche des Konus 13 in die axialen Begrenzungsflächen, d.h. der Außenflächen des Flansches 15 sind eckig. Der Übergang 23 der Innenfläche des radialen Flansches 15 in die Innenfläche des Mantels 11 (in Richtung zum freien Ende des Behälters 10) erfolgt entlang einer Abrundung mit einem Radius, der etwa 1/3 der Dicke des Bodenabschnittes 12 entspricht.

Die axiale Länge LK des Konus 13, auch Konusform 13 genannt, gemessen von der Außenfläche des Bodenabschnittes 12 bis zur Außenfläche des Flansches 15 entspricht etwa der Dicke des Bodenabschnittes 12 und kann dabei etwa 10% mehr betragen.

Die Ausführung nach der Fig. 2 besitzt einen Konus 20, dessen geöffnete Seite bei ansonsten gleichen geometrischen Abmessungen zum freien Ende des Behälters 21 hinweist, so dass der Bodenabschnitt 22 näher zur bodenseitigen Stirnkante des Behälters 21 gelegen ist als der Bodenabschnitt 12 des Behälters 10 der Fig. 1. Der Konus 20 ist mit der Innenfläche des Mantels des Behälters 21 mittels eines Flansches 25 verbunden, wobei der Abstand D1 der Einmündung des Flansches 25 in die Innenfläche des Mantels 21 größer sein kann als der Abstand D der Ausführung nach Fig. 1. Die Länge des Konus 20 bezogen auf die Dicke des Bodenabschnittes 22 entspricht den Verhältnissen der Ausführung nach Fig. 1. In gleicher Weise ist auch der Übergang 24 von der Innenfläche des Flansches 25 zur Innenfläche des Mantels (ohne Bezugsziffer) des Behälters 21 ebenso abgerundet wie der Übergang 23 der Ausführung nach der Fig. 1.

Die Fig. 3 zeigt eine weitere Ausgestaltung, die aber kein Gegenstand der Erfindung ist. Zwischen der Innenfläche des Mantels 30 des Behälters 31 und einem Bodenabschnitt 32 ist die Konusform durch einen S-förmigen Übergang 33 gebildet, dessen strichpunktiert dargestellte Mittellinie 34 einen Wendepunktkreis 35 besitzt, durch den eine Tangentenfläche 36 hindurch verläuft, die einen dem Konuswinkel des Konus 13 oder 20 entsprechenden Konuswinkel mit der Mittelachse des Behälters 31 bildet. Es besteht dabei die Möglichkeit, einen dem Flansch 15 bzw. 25 entsprechenden Flansch 37 vorzusehen, über den die S-Form 33 mit der Innenfläche des Behälters 31 verbunden ist.

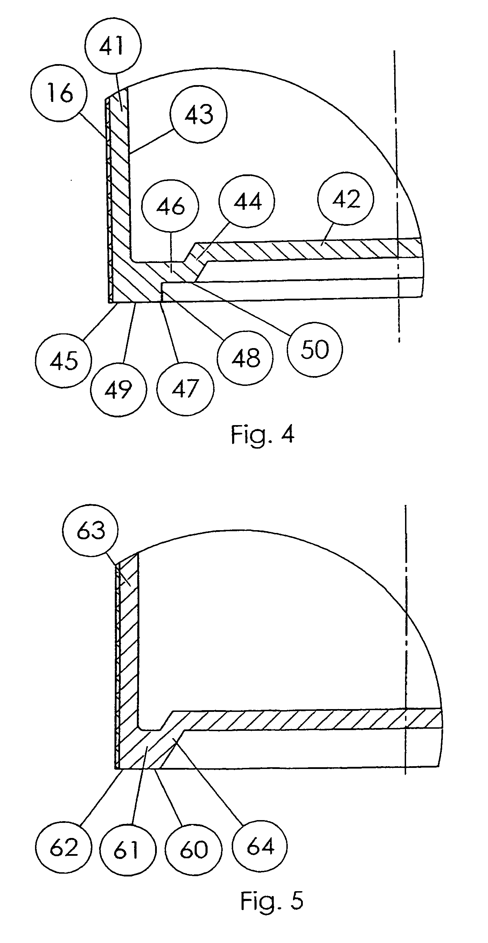

Es sei Bezug genommen auf die Fig. 4. Von dem Behälter, der hier die Bezugsziffer 41 trägt, ist lediglich der Teilbereich gezeichnet, in dem sich der Übergang vom Boden 42 zur Seitenwand 43 des Behälters 41 befindet. Am Außenrand des Bodens 42 schließt eine Konusform 44 an, die sich zur bodenseitigen Stirnkante 45 bzw. der durch die Stirnkante aufgespannten Ebene des Behälters 41 öffnet. An die Konusform 44 schließt sich ein radialer Flansch 46 an, dessen äußere Flanschfläche 47 eine Stufung 48 aufweist, durch welche zwei radiale, axial äußere Flächenabschnitte 49 und 50 gebildet sind, wobei der radial äußere Flächenabschnitt 49 in der Ebene der bodenseitigen Stirnkante 15 des Behälters 41 liegt. Der radial innere Flächenabschnitt 50 befindet sich in einem Abstand von der durch die Stirnkante 45 aufgespannten Ebene, der etwa der radialen Dicke des Behälters 41 entspricht. Mit der Stufung 48, die einen zylindrischen Bereich außerhalb des Bodens 42 und der Konusform 44 umschließt wird die axiale Dicke des radialen Flansches 46 radial nach außen etwa verdoppelt. Dies kann die Stabilität des Behälters 41 erhöhen.

Die Fig. 5 zeigt eine weitere Variante. Unterschiedlich zur Ausführung nach Fig. 1 ist die Lage des bodenseitig äußeren radialen Flächenbereiches 60 des radialen Flansches 61. Dieser Flächenbereich 60 liegt in der durch die Stirnkante 62 des Behälters 63 aufgespannten Ebene. Die Konusform 64 öffnet sich in Richtung der bodenseitigen Stirnkante 62 des Behälters 63.

## Patentansprüche

1. Rohrförmiger, aus spritzbarem oder gießbarem aushärtendem Material bestehender Behälter (11,21,31), mit auf der Außenseite im In-Mould-Verfahren aufgebrachtem Etikett oder Label (16) und mit einem Bodenabschnitt (12,22,32), **dadurch gekennzeichnet, dass** am Außenrand des Bodenabschnittes (12,22,32) eine Konusform (13,20,33) anschließt, deren Ende mit größerem Durchmesser über einen radialen Flansch (15,25,37) im Bereich der bodenseitigen Stirnkante mit der Innenfläche des Behälters (11,12,31) verbunden ist, daß die Konusform Teil des Bodens ist, und dass der Konuswinkel der Konusform als Winkel zwischen der Konusfläche und der Mittelachse des Behälters (11,21,31,41,63) zwischen 15 bis 45 Grad beträgt und dass die Übergänge zwischen den axialen Begrenzungsflächen (12a,12b) des Bodenabschnittes (12) und der Konusform (13) und zwischen denen (13a,13b) der Konusform (13) und den axialen Begrenzungsflächen des radialen Flansches (15) eckig ausgebildet sind.

2. Behälter nach Anspruch 1, **dadurch gekennzeichnet, dass** zusätzlich der Übergang zwischen der axialen Außenfläche des radialen Flansches (15) und der Innenfläche des Behälters eckig ausgebildet ist.

3. Behälter nach Anspruch 1, **dadurch gekennzeichnet, dass** der radiale Flansch in einem Abstand (D,D1) von der bodenseitigen Stirnkante in die Innenfläche des Behälters einmündet.

4. Behälter nach Anspruch 3, **dadurch gekennzeichnet, dass** die bodenseitige äußere Flanschfläche (47) des radialen Flansches (46) eine die bodenseitige äußere Flanschfläche (47) in zwei radiale Flächenabschnitte (49,50) unterteilende Stufung (48) aufweist, wobei der radial außen liegende Flächenbereich in der Ebene der bodenseitigen Stirnfläche des Behälters (41) liegt.

5. Behälter nach Anspruch 1, **dadurch gekennzeichnet, dass** die bodenseitige, äußere Flanschfläche (60) des radialen Flansches (61) in der Ebene der bodenseitigen Stirnkante des Behälters (63) liegt

6. Behälter nach einem der vorigen Ansprüche, **dadurch gekennzeichnet, dass** sich die Konusform (13,33, 44,64) in Richtung der bodenseitigen Stirnkante des Behälters (11,31,41,63) öffnet.

7. Behälter nach einem der vorigen Ansprüche, **dadurch gekennzeichnet, daß** sich die Konusform (20) in Richtung Innenraum des Behälters (21) öffnet.

8. Behälter nach Anspruch 6, **dadurch gekennzeichnet, dass** der Konuswinkel ca. 15 Grad beträgt.

9. Behälter nach einem der vorigen Ansprüche, **dadurch gekennzeichnet, dass** die axiale Länge der Konusform etwa der Dicke des Bodenabschnittes entspricht.

## Claims

1. Tubular container (11, 21, 31) which is composed of an injectable or castable curing material, having a tag or label (16) which is applied by the in-mould process on the outside, and having a base portion (12, 22, 32), **characterized in that** the outer periphery of the base portion (12, 22, 32) is adjoined by a conical shape (13, 20, 33) the end of which, having a comparatively large diameter, is connected by way of a radial flange (15, 25, 37) in the region of the base-side end edge to the inner face of the container (11, 21, 31), **in that** the conical shape is part of the base, and **in that** the cone angle of the conical shape, being the angle between the cone face and the central axis of the container (11, 21, 31, 41, 63), is between 15 and 45 degrees, and **in that** the transitions between the axial delimitation faces (12a, 12b) of the base portion (12) and the conical shape (13) and those (13a, 13b) of the conical shape (13) and the axial delimitation faces of the radial flange (15) are configured so as to be angular.

2. Container according to Claim 1, **characterized in that** additionally the transition between the axial outer face of the radial flange (15) and the inner face of the container is configured so as to be angular.

3. Container according to Claim 1, **characterized in that** the radial flange opens into the inner face of the container at a spacing (D, D1) from the base-side end edge.

4. Container according to Claim 3, **characterized in that** the base-side outer flange face (47) of the radial flange (46) has a step (48) which subdivides the base-side outer flange face (47) into two radial face portions (49, 50), wherein the radially outer face region lies in the plane of the base-side end face of the container (41).

5. Container according to Claim 1, **characterized in that** the base-side outer flange face (60) of the radial flange (81) lies in the plane of the base-side end edge of the container (63).

6. Container according to one of the preceding claims, **characterized in that** the conical shape (13, 33, 44, 64) opens out in the direction of the base-side end edge of the container (11, 31, 41, 63) .

7. Container according to one of the preceding claims, **characterized in that** the conical shape (20) opens out in the direction of the interior of the container (21).

8. Container according to Claim 6, **characterized in that** the cone angle is approx. 15 degrees.

9. Container according to one of the preceding claims, **characterized in that** the axial length of the conical shape corresponds to about the thickness of the base portion.

## Revendications

1. Récipient tubulaire (11, 21, 31) constitué d'un matériau durcissant apte à être injecté ou coulé, et présentant une étiquette ou label (16) appliqués sur son côté extérieur par un procédé d'application en moule, et une partie de fond (12, 22, 32),
**caractérisé en ce que**
la forme d'un cône (13, 20, 33) dont l'extrémité de grand diamètre est raccordée à la surface intérieure du récipient (11, 21, 31) par l'intermédiaire d'une bride radiale (15, 25, 37) au niveau du bord frontal côté fond se raccorde sur le bord extérieur de la partie de fond (12, 22, 32),
**en ce que** la forme de cône fait partie du fond,
**en ce que** l'angle de la forme du cône, à savoir l'angle entre la surface du cône et l'axe central du récipient (11, 21, 31, 41, 63), est compris entre 15 et 45 degrés et
**en ce que** les transitions entre les surfaces frontières axiales (12a, 12b) de la partie de fond (12) et la forme (13) de cône et entre celles (13a, 13b) de la forme de cône (13) et les surfaces frontières axiales de la bride radiale (15) sont en coin.

2. Récipient selon la revendication 1, **caractérisé en ce que** la transition entre la surface extérieure axiale de la bride radiale (15) et la surface intérieure du récipient est également en coin.

3. Récipient selon la revendication 1, **caractérisé en ce que** la bride radiale débouche dans la surface intérieure du récipient à une distance (D, D1) du bord frontal côté fond.

4. Récipient selon la revendication 3, **caractérisé en ce que** la surface extérieure (47) côté fond de la bride radiale (46) présente un gradin (48) qui divise la surface extérieure (47) côté fond de la bride en deux parties radiales de surface (49, 50), la partie de surface située radialement à l'extérieur étant située dans le plan de la surface frontale côté fond du récipient (41).

5. Récipient selon la revendication 1, **caractérisé en ce que** la surface extérieure (60) côté fond de la bride radiale (61) est située dans le plan du bord frontal côté fond du récipient (63).

6. Récipient selon l'une des revendications précédentes, **caractérisé en ce que** la forme (13, 33, 44, 64) du cône s'ouvre en direction du bord frontal côté fond du récipient (11, 31, 41, 63).

7. Récipient selon l'une des revendications précédentes, **caractérisé en ce que** la forme (20) du cône s'ouvre en direction de l'espace intérieur du récipient (21).

8. Récipient selon la revendication 6, **caractérisé en ce que** l'angle du cône est d'environ 15 degrés.

9. Récipient selon l'une des revendications précédentes, **caractérisé en ce que** l'angle axial de la forme du cône correspond sensiblement à l'épaisseur de la partie de fond.
